# EUROPEAN PATENT APPLICATION

(11) **EP 4 633 238 A1**
(43) Date of publication of application: **15.10.2025**
(21) Application number: 23900977.2
(22) Date of filing: 27.11.2023
(51) Int. Cl.: H04W 36/18, H04W 36/00, H04W 84/12

(54) **METHOD AND DEVICE FOR MULTI-LINK DEVICE-BASED ROAMING IN WIRELESS LAN SYSTEM**

(30) Priority: 07.12.2022 KR 20220169970
(71) Applicant: LG Electronics Inc., Yeongdeungpo-gu Seoul 07336 (KR)
(72) Inventor: JANG, Insun, Seoul 06772 (KR); CHUN, Jinyoung, Seoul 06772 (KR); CHOI, Jinsoo, Seoul 06772 (KR); BAEK, Sunhee, Seoul 06772 (KR)
(74) Representative: Frenkel, Matthias Alexander
(86) International application number: PCT/KR2023/019200
(87) International publication number: WO 2024/122958

(57) **Abstract**

A method and a device for multi-link device (MLD)-based roaming in a wireless LAN system are disclosed. A method performed by a station (STA) in a wireless LAN system may comprise the steps of: receiving announcement information related to multi-link device (MLD)-based roaming from a first access point (AP) associated with the STA; transmitting a request including one or more link identifiers for one or more second APs to the first AP; and receiving a response including the one or more link identifiers from the first AP.

## Description

### [TECHNICAL FIELD]

The present disclosure relates to a roaming method and device based on a multi-link device (MLD) in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a roaming method and device based on a multi-link device (MLD) in a WLAN system.

An additional technical problem of the present disclosure is to provide a method and a device for supporting or performing roaming of a station (STA) between different access points (AP) belonging to a common MLD in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a WLAN system according to an aspect of the present disclosure may include receiving announcement information related to multi-link device (MLD)-based roaming from a first access point (AP) associated with the STA; transmitting a request including at least one link identifier for at least one second AP to the first AP; and receiving a response including the at least one link identifier from the first AP.

A method performed by an access point (AP) in a WLAN system according to an additional aspect of the present disclosure may include transmitting announcement information related to multi-link device (MLD)-based roaming to at least one station (STA) associated with the AP; receiving a request including at least one link identifier for at least one second AP from the at least one STA; and transmitting a response including the at least one link identifier to the at least one STA.

### [Technical Effects]

According to the present disclosure, a roaming method and device based on a multi-link device (MLD) in a WLAN system may be provided.

According to the present disclosure, a method and a device for supporting or performing roaming of a station (STA) between different access points (AP) belonging to a common MLD in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustratively shows the structure of a ML element to which the present disclosure may be applied.
FIG. 9 is a diagram for describing an example of a high-level structure for an AP MLD to which the present disclosure may be applied.
FIG. 10 is a diagram for describing a BSS transition in the existing WLAN system.
FIG. 11 is a diagram for describing an example of a method in which a STA performs MLD-based roaming according to the present disclosure.
FIG. 12 is a diagram for describing an example of a method in which an AP supports a STA's MLD-based roaming according to the present disclosure.
FIG. 13 is a diagram for describing an example of a MLD-based roaming structure and procedure according to the present disclosure.
FIG. 14 is a diagram for describing an example of an element including announcement information according to the present disclosure.
FIG. 15 is a diagram for describing an example of an element including request information according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

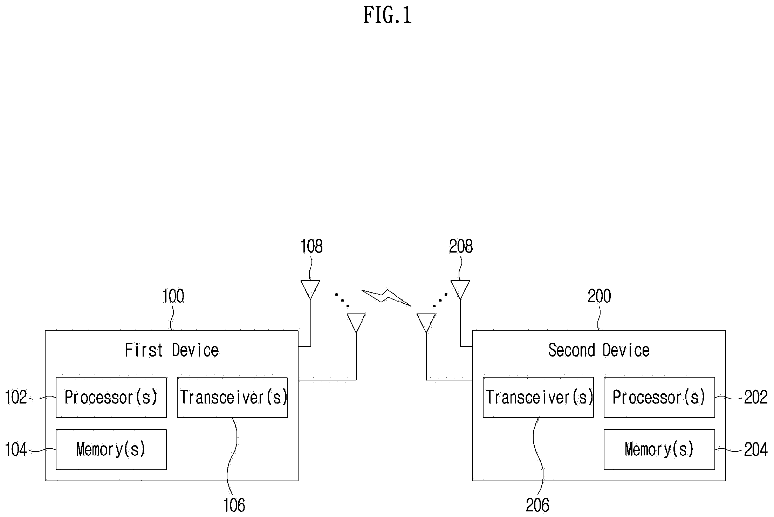

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

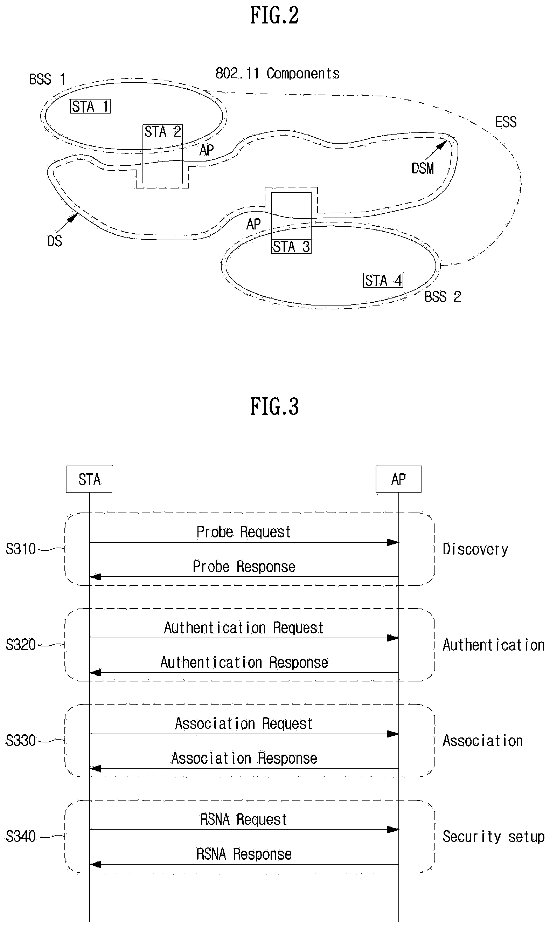

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

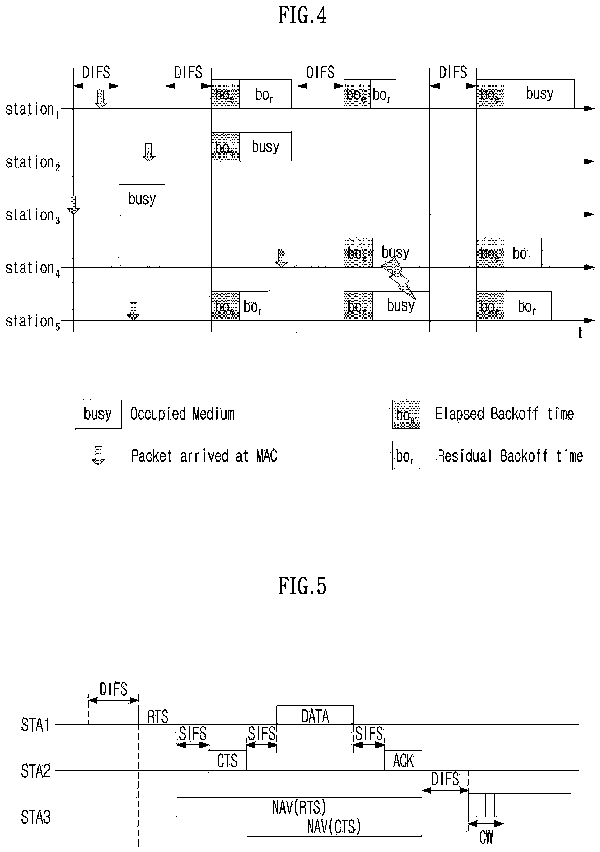

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

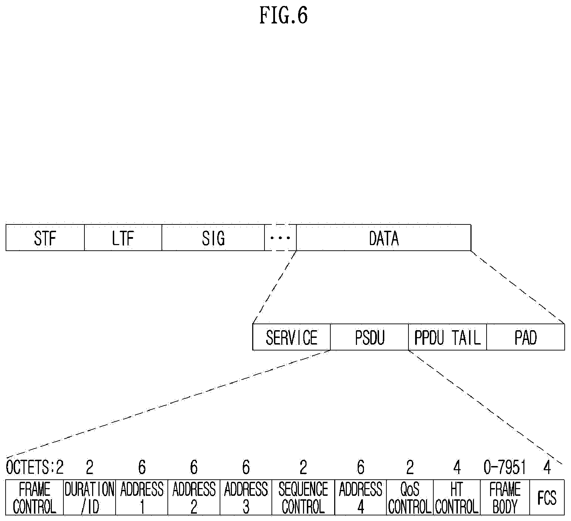

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

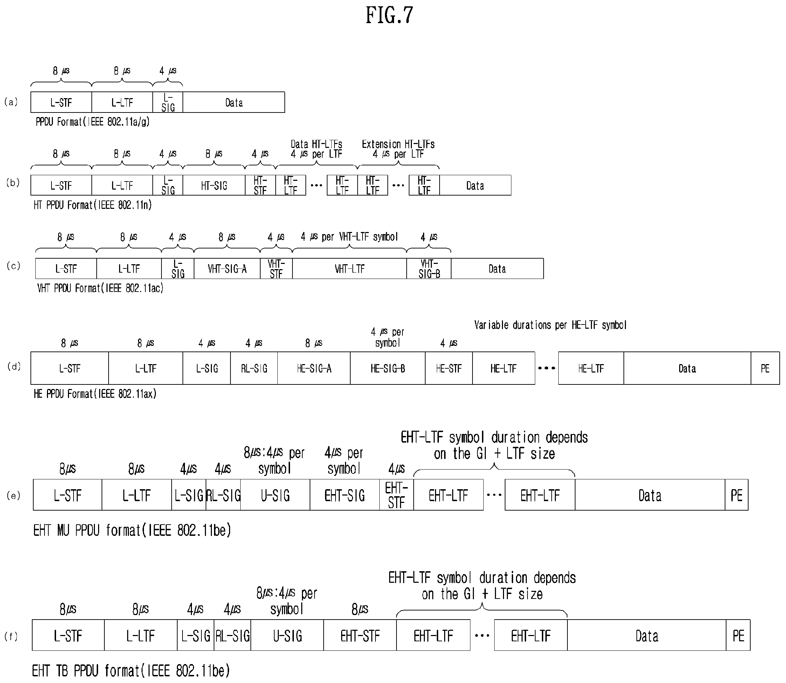

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multi-link Operation

Hereinafter, a multi-link operation supported by a STA according to the present disclosure will be described.

A STA (an AP STA and/or a non-AP STA) described in the present disclosure may support multi link (ML) communication. ML communication may refer to communication supporting a plurality of links. A link related to ML communication may include a channel (e.g., 20/40/80/160/240/320MHz channels) in a frequency band in which a STA operates (e.g., a 2.4GHz band, a 5GHz band, a 6GHz band, etc.). A plurality of links used for ML communication may be configured in various ways. For example, a plurality of links supported by one STA for ML communication may belong to the same frequency band or belong to a different frequency band. In addition, each link may correspond to a frequency unit in a predetermined size (e.g., a channel, a subchannel, a RU, etc.). In addition, all or part of a plurality of links may be a frequency unit in the same size or may be a frequency unit in a different size.

When one STA supports a plurality of links, a transmitting or receiving device supporting each link may operate like one logical STA. In other words, a MLD refers to a device which has at least one affiliated STA as a logical entity and has a single MAC service access point (SAP) for one MAC data service and logical link control (LLC). A non-AP MLD refers to a MLD that each STA affiliated with a corresponding MLD is a non-AP STA. A multi-radio non-AP MLD refers to a non-AP MLD that supports reception or exchange of a frame in at least one link at a time. An AP MLD refers to a MLD that each STA affiliated with a corresponding MLD is an AP STA.

A multi-link operation (MLO) may enable a non-AP MLD to discover, authenticate and associate an AP MLD and set up a plurality of links. Based on a supported capability exchanged during an association procedure, each link may enable channel access and frame exchange between a non-AP MLD and an AP MLD. A STA affiliated with a MLD may select and manage its capability and operation parameter independently from other STA(s) affiliated with the same MLD.

Through a multi-link setup process, an AP MLD and/or a non-AP MLD may transmit or receive link-related information which may be supported by a corresponding MLD. Link-related information may include at least one of whether it is a simultaneous transmit and receive (STR) operation capable of simultaneous transmission or reception on a plurality of links or a non-simultaneous transmit and receive (NSTR) operation incapable of simultaneous transmission or reception, information on the number/upper limit of UL/DL links, information on a location/a band/a resource of an UL/DL link, information on a frame type (e.g., management, control, data) available or preferred in at least one UL/DL link, information on an ACK policy available or preferred in at least one UL/DL link or information on a traffic identifier (TID) available in at least one UL/DL link supported by a corresponding MLD.

An AP MLD (e.g., a NSTR mobile AP MLD) may configure one link among a plurality of links as a primary link. An AP MLD may perform a beacon frame, a probe response frame and a group addressed data frame only on a primary link. The remaining other link(s) of a plurality of links may be referred to as a non-primary link. An AP MLD operating on a non-primary link may operate not to transmit a beacon frame or a probe response frame. In addition, a non-AP MLD may perform frame exchange during authentication, (re)association and 4-way handshaking only on a primary link.

When at least one traffic identifier (TID) is mapped to a corresponding link through a multi-link setup process, a setup link may be defined as being enabled and when there is no TID mapped to a corresponding link, a setup link may be defined as being disabled. A TID should be always mapped to at least one setup link unless admission control is used. Basically, a TID is mapped to all setup links, so all setup links may be activated.

When a link is activated, a corresponding link may be used for frame exchange according to a power state of a non-AP STA operating in a corresponding link. Only a MSDU or an A-MSDU with a TID mapped to an active link may be transmitted in a corresponding link. A management frame and a control frame may be transmitted only in an active link.

When a link is deactivated, a corresponding link may not be used for frame exchange by including a management frame for both a DL and an UL.

In a multi-link setup process, activation/deactivation of each link may be indicated through TID-to-Link mapping. TID-to-Link mapping may be performed in a default mapping mode or/and a negotiation mapping mode.

One STA among STAs belonging to a MLD may provide information on at least one link other than its link for multi-link discovery (e.g., obtain information on a plurality of links including a corresponding link on one link) or multi-link setup (e.g., simultaneous association on a plurality of links through exchange between an association request/response frame on one link). To provide this information, a multi-link (ML) element may be defined.

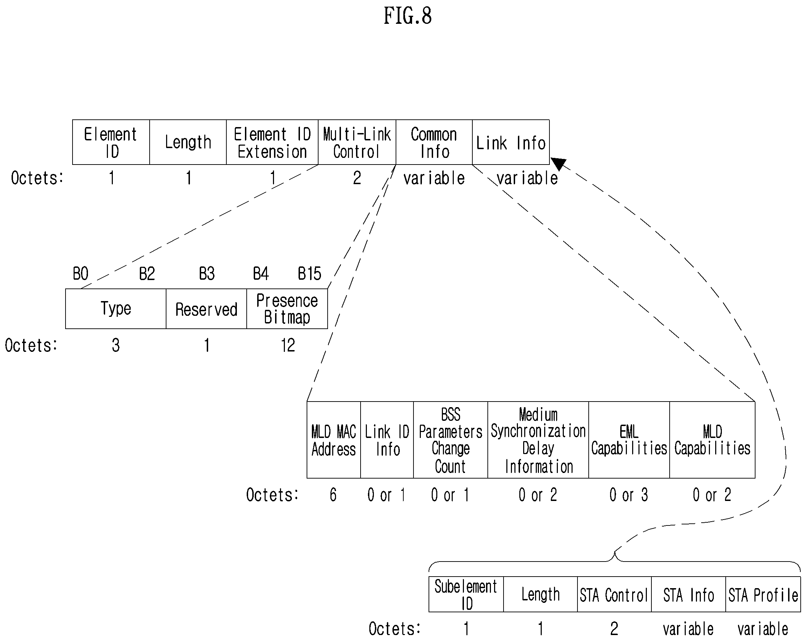

FIG. 8 illustratively shows the structure of a ML element to which the present disclosure may be applied.

In a ML element, an element ID field and an element ID extension field may have a specific value (e.g., 255 and 107) showing that they are a ML element and a length field may have a value showing a length of the remaining fields (e.g., an octet unit) excluding an element ID field and a length field.

A multi-link control field is defined as having a size of 2 octets and may include a 3-bit type subfield, a 1-bit reserved bit and a 12-bit presence bitmap subfield. A type subfield may have a value indicating one of types such as basic, a probe request, a reconfiguration, a tunneled direct-link setup (TDLS), priority access, etc. A presence bitmap subfield shows whether there are a variety of subfield(s) within a common information field and may be defined in a different format according to various variants (or types described above) of a ML element.

A common information field is defined as having a variable size and may include a 6-octet MLD MAC address subfield, and this subfield may have a value specifying a MAC address of a MLD to which a STA transmitting a basic ML element belongs. In addition, a link ID information subfield, a BSS parameter change count subfield, a medium synchronization delay information subfield, an enhanced multi-link (EML) capability subfield, a MLD capability subfield, etc. may or may not be included in a common information field.

A link information field is defined as having a variable size, and may include link specific information and may exist optionally. If a link information field exists, it may include at least one sub-element. A format and order of a sub-element may be defined in various ways. As an example of an optional sub-element ID for a basic variant ML element, 0, a value of a sub-element ID, corresponds to a name of a per-STA profile and is extensible, and that value 221 corresponds to a vendor-specific name and whether it may be extended may be determined by a vendor, and the remaining values 1-220 and 222-255 may be reserved.

A per-STA profile sub-element may include a 1-octet sub-element ID subfield, a 1-octet length subfield, a 2-octet STA control subfield, a variable-sized STA information subfield and a variable-sized STA profile subfield. A STA control subfield may include information such as a link ID, whether a complete profile is included, whether a STA MAC address exists, etc. A STA information subfield may include information such as a STA MAC address, etc. A STA profile subfield may include information included in a probe response or probe request frame body, information included in a (re)association response or (re)association request frame body, etc. according to whether a reported STA is an AP STA or a non-AP STA.

The format of a ML element in FIG. 8 is illustrative, and a order, a name, a size, etc. of a field/a subfield may be changed, an additional field/subfield may be further defined and some fields/subfields may be excluded. In other words, a common information field may include common information between STAs in a MLD, and a link information field may include specific information on each STA/link (e.g., in a per-STA profile sub-element including a link ID corresponding to a corresponding STA).

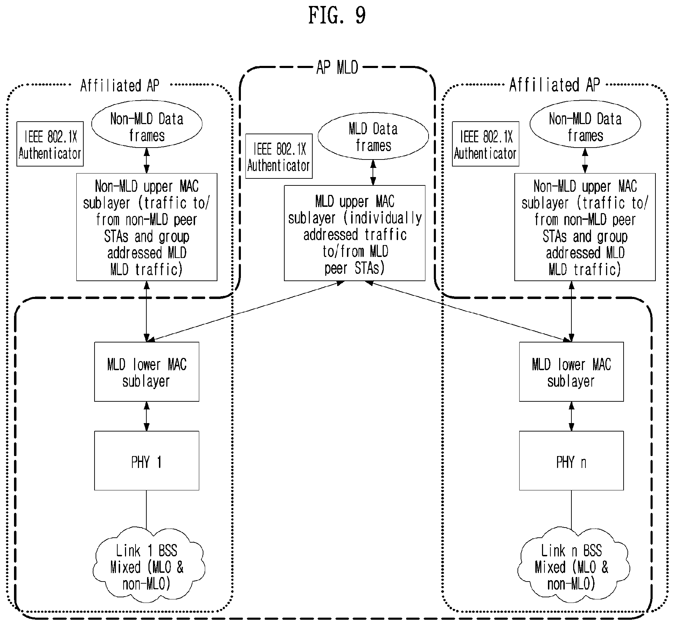

FIG. 9 is a diagram for describing the example of a high-level architecture for an AP MLD to which the present disclosure may be applied.

An AP MLD may include one or more APs. One AP MLD may have a high-level architecture as in FIG. 9. For example, a MLD may control various procedures/parameters common to multiple APs by using an upper MAC sublayer. For example, authentication, association, sequence number (SN)/packet number (PN) allocation, power saving buffering for individually addressed frames, etc. may be commonly controlled among APs affiliated with one AP MLD.

Each affiliated AP (e.g., AP 1, ..., AP n) may provide an upper MAC sublayer function for a non-MLD data frame (e.g., traffic transmitted and received with a non-MLD STA, group-addressed MLD traffic, etc.). An AP MLD may provide an upper MAC sublayer function for a MLD data frame (e.g., traffic transmitted and received with a MLD STA) and provide MLD data to a lower MAC sublayer of each affiliated AP. Each affiliated AP may provide a PHY function (e.g., PHY 1, ..., PHY n). Both a ML operation (MLO) and a non-MLO may be performed on a link corresponding to each PHY (e.g., link 1, ..., link n).

### MLD-based Roaming

Before describing MLD-based roaming according to the present disclosure, a procedure (e.g., BSS transition) in which a non-AP STA moves or roams from one AP to another AP in the existing WLAN system is first described.

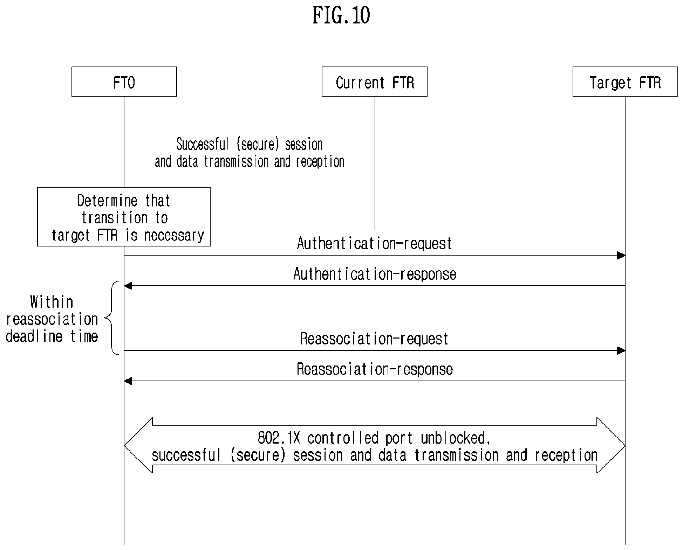

FIG. 10 is a diagram for describing a BSS transition in the existing WLAN system.

For a fast BSS transition (FT) method corresponding to the typical example of a BSS transition (or roaming), various processes such as an authentication request/response, a re-association request/response, etc. are required between a FT originator (FTO) and a target FTR in order to move from a current FT responder (FTR) to a target FTR. In other words, in the existing BSS transition method, a re-association process is required on the same mobility domain.

In addition, after a process illustrated in FIG. 10, various operation parameters such as an agreement related to BlockAck (BA) or Service Classification Service (SCS), etc., a SN, an EDCA function (EDCAF) parameter, etc. are reset. Accordingly, a FTO must perform a variety of and a large number of frame exchanges for FT and must perform an agreement/a configuration with a new FTR again. Accordingly, the complexity and overhead of a FT process are high and data loss may occur during a FT process. In this way, it is difficult to provide seamless roaming to a STA in the existing WLAN system.

The present disclosure describes examples for seamless roaming based on a MLD. For example, based on an AP MLD functionality described by referring to FIG. 9, when a non-AP STA moves/roams between entities affiliated with one MLD, a MLD-level parameter/configuration/agreement may be maintained without being reset.

In the following description, a STA performing roaming is referred to as RSTA, a currently associated AP is referred to as an OAP (old AP) or a first AP (or AP 1) and an AP to be newly associated is referred to a NAP (new AP) or a second AP (or AP 2). In addition, MLD-based roaming that is newly proposed in the present disclosure may be simply referred to as MLD roaming.

In addition, each of RSTA, an OAP and a NAP may be a STA affiliated with a different MLD.

For example, RSTA is a non-AP STA affiliated with a non-AP MLD, and may perform MLD roaming simultaneously/together with at least one other non-AP STA.

For example, an OAP may be an AP STA affiliated with AP MLD 1, and other APs other than an OAP may be affiliated with AP MLD 1.

For example, a NAP may be an AP STA affiliated with AP MLD 2, and other APs other than a NAP may be affiliated with AP MLD 2.

For example, an OAP and a NAP may be affiliated with the same one upper MLD (or roaming MLD or AP MLD 0). For example, AP MLD 1 with which an OAP is affiliated may be affiliated with an upper MLD (e.g., AP MLD 0), and AP MLD 2 with which a NAP is affiliated may be affiliated with the same upper MLD (e.g., AP MLD 0). Alternatively, among the APs affiliated with AP MLD 1, at least one AP including an OAP may be affiliated with an upper MLD (e.g., AP MLD 0), and other AP(s) may not be affiliated with the same upper MLD (e.g., AP MLD 0) or may be affiliated with another upper MLD or may not be affiliated with an upper MLD. Similarly, among the APs affiliated with AP MLD 2, at least one AP including a NAP may be affiliated with an upper MLD (e.g., AP MLD 0), and other AP(s) may not be affiliated with the same upper MLD (e.g., AP MLD 0) or may be affiliated with another upper MLD or may not be affiliated with an upper MLD.

In addition, considering a non-AP MLD, at least one OAP affiliated with AP MLD 1 may be affiliated with an upper MLD, and at least one NAP belonging to AP MLD 2 may be affiliated with the same upper MLD. For example, MLD-based roaming from a plurality of OAPs to a plurality of NAPs may be performed.

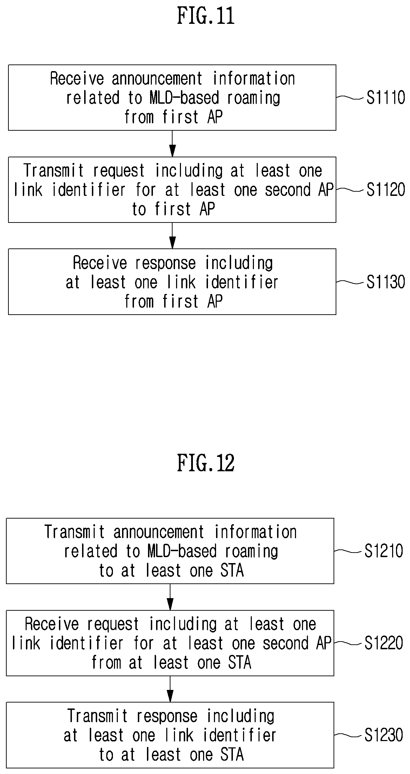

FIG. 11 is a diagram for describing an example of a method in which a STA performs MLD-based roaming according to the present disclosure.

In S1110, a STA may receive announcement information related to MLD-based roaming from a first AP (e.g., an OAP).

For example, announcement information may include information on whether MLD-based roaming is enabled, a MLD roaming identifier, etc.

This announcement information may be included in a management frame (e.g., a beacon, a probe response, a (re)association response, etc.). A management frame may include a newly defined MLD-based roaming element or an existing reduced neighbor report (RNR) element. Announcement information may be included, for example, in a MLD-based roaming element or a RNR element. A MLD-based roaming element or RNR element may include at least one parameter for a MLD. The name or format of elements as above included in a management frame is merely exemplary, and the announcement information of the present disclosure may be included in a frame/an element under a different name.

In S1120, a STA may transmit a request including at least one link identifier for at least one second AP (e.g., a NAP) to a first AP.

This request may include, for example, a reconfiguration ML element. A reconfiguration ML element may correspond to a format in which a type subfield in the ML control field of a ML element as in an example of FIG. 8 is set as a value indicating a reconfiguration. This reconfiguration ML element is merely exemplary, and information included in a request according to the present disclosure may be included in the element of another name or format.

For example, the common information field of a reconfiguration ML element may include an enhanced ML (EML) capability subfield, a MLD capability and operation subfield, etc. An EML capability subfield may include information related to an EML single radio (EMLSR) operation, an EML multi-radio (EMLMR) operation, etc. A MLD capability and operation subfield may include information about the maximum number of simultaneous links, whether to support single response scheduling (SRS), whether to support TID-to-Link mapping negotiation, a frequency separation/AP MLD type indication for STR, whether to support an AP assistance request (AAR), whether to support a link reconfiguration operation, etc.

For example, the per-STA profile sub-element of the link information field of a reconfiguration ML element may include information about a NSTR bitmap size, a NSTR indication bitmap, a MLD-based roaming timer, a complete profile set as 0 or 1, a changed profile, etc. This information may be included in the STA control field of a per-STA profile sub-element or in a STA information field, and some of the information may be included in a STA control field and some of the information may be included in a STA information field.

A link identifier for a second AP may be included in a STA control field.

In S1130, a STA may receive a response including the at least one link identifier from the first AP (e.g., an OAP).

This response may include a status code representing whether a request is accepted, information provided to a STA for MLD-based roaming, group key information, a channel switching announcement element, extended channel switching announcement information, etc.

For example, information provided to a STA for MLD-based roaming may include, for example, a basic ML element. A basic ML element may correspond to a format in which a type subfield in the ML control field of a ML element as in an example of FIG. 8 is set as a value indicating the basic. This basic ML element is merely exemplary, and information included in a response according to the present disclosure may be included in the element of another name or format.

For example, the common information field of a basic ML element may include information common to at least one second AP.

For example, the per-STA profile sub-element of the link information field of a basic ML element may include information about a MLD-based roaming timer, a complete profile set as 0 or 1, etc.

This information may be included in the STA control field of a per-STA profile sub-element or in a STA information field, and some of the information may be included in a STA control field and some of the information may be included in a STA information field.

As an additional example, at least one of channel switching announcement information or extended channel switching announcement information included in a response may be included in the STA information field of the per-STA profile sub-element of a basic ML element or may be included in a STA profile field, and some of the information may be included in a STA information field and some of the information may be included in a STA profile field.

A method described in the example of FIG. 11 may be performed by a first device 100 in FIG. 1. For example, at least one processor 102 of a first device 100 in FIG. 1 may be configured to receive announcement information related to MLD-based roaming from a first AP through at least one transceiver, transmit a request including at least one link identifier for at least one second AP to the first AP through at least one transceiver and receive a response including at least one link identifier from a first AP through at least one transceiver. Furthermore, at least one memory 104 of a first device 100 may store instructions for performing a method described in the example of FIG. 11 or examples described below when executed by at least one processor 102.

FIG. 12 is a diagram for describing an example of a method in which an AP supports a STA's MLD-based roaming according to the present disclosure.

In S1210, an AP may transmit announcement information related to MLD-based roaming to at least one STA.

Since specific details of announcement information are the same as those described in S1110 of FIG. 11, an overlapping description is omitted.

In S1220, an AP may receive a request including at least one link identifier for at least one second AP from at least one STA.

Since specific details of a request are the same as those described in S1120 of FIG. 11, an overlapping description is omitted.

In S1230, an AP may transmit a response including at least one link identifier to at least one STA.

Since specific details of a response are the same as those described in S1130 of FIG. 11, an overlapping description is omitted.

A method described in the example of FIG. 12 may be performed by a second device 200 in FIG. 1. For example, at least one processor 202 of a second device 200 in FIG. 1 may be configured to transmit announcement information related to MLD-based roaming to at least one station (STA) through at least one transceiver, receive a request including at least one link identifier for at least one second AP from at least one STA through at least one transceiver and transmit a response including at least one link identifier to at least one STA through at least one transceiver. Furthermore, at least one memory 204 of a second device 200 may store instructions for performing a method described in the example of FIG. 12 or examples described below when executed by at least one processor 202.

The examples of FIGS. 11 and 12 may correspond to some of the various examples of the present disclosure. Hereinafter, various examples of the present disclosure including the example of FIGS. 11 and 12 will be described in more detail.

In embodiments described below, for clarity of a description, it is described by assuming AP 1 corresponding to one OAP, AP 2 corresponding to one NAP, one upper MLD related to roaming between AP 1 and AP 2 and one STA, but examples of the present disclosure may also be applied to MLD-based roaming for a plurality of STAs/a plurality of NAPs.

In addition, as described above, it is assumed that AP 1 corresponding to an OAP is affiliated with AP MLD 1, AP 2 corresponding to a NAP is affiliated with AP MLD 2, and AP 1 and AP 2 are affiliated with the same one upper MLD (e.g., roaming MLD or AP MLD 0). In addition, it is assumed that a STA is affiliated with a non-AP MLD.

### Embodiment 1

This embodiment relates to an exemplary operation of a STA and an AP for MLD-based roaming.

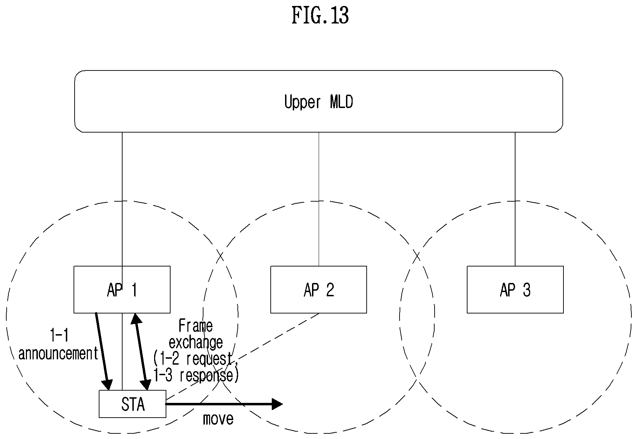

FIG. 13 is a diagram for describing an example of a MLD-based roaming structure and procedure according to the present disclosure.

AP 1, AP 2 and AP 3 correspond to an AP affiliated with an upper MLD (e.g., a roaming MLD). AP 1, AP 2 and AP 3 may not be co-located. For example, when a STA associated with AP 1 moves to AP 2, roaming from AP 1 to AP 2 may be required. It only assumes an example in which MLD-based roaming is generally applied according to the present disclosure, and there may be no limit that MLD-based roaming is applied only in this scenario. For example, even when AP 1 and AP 2 are co-located, roaming from AP 1 to AP 2 may be performed according to signal strength, channel quality or other reasons.

An upper MLD corresponds to a logical entity, and may be implemented as a single physical entity or as multiple physical entities. An upper MLD may provide the function of an MLD upper MAC sublayer for affiliated APs regardless of a position, and in particular, may provide a function related to MLD-based roaming. For example, an upper MLD may correspond to a MLD that may cover AP 1, AP 2 and AP 3 and apply MLO and MLD-based roaming.

In the example of FIG. 13, a STA associated with AP 1 may perform MLD-based roaming to AP 2. When a frame exchange between AP 2 and a STA is required in a MLD-based roaming process, a STA may establish a tentative association with AP 2. A tentative association may exchange/request some/different information of information/capability exchanged/required in a general association between AP 1 and a STA.

MLD-based roaming according to the present disclosure may be performed by changing a link while maintaining a ML setup without tearing down the existing ML setup. For example, while maintaining a ML setup for the upper MLD of AP 1 and AP 2, a STA may move from AP 1 to AP 2 by changing a link within an upper MLD. Accordingly, overhead and risk of data loss may be reduced compared to the existing BSS transition.

A MLD-based roaming procedure may include the announcement of an AP (Embodiment 1-1) and a frame exchange between an AP and a STA (a request in Embodiment 1-2 and a response in Embodiment 1-3).

An announcement may correspond to a procedure in which each AP belonging to an upper MLD informs STA(s) of information on whether to support MLD-based roaming, etc. A frame exchange between a STA and an AP may be performed based on this announcement information.

A frame exchange may correspond to a procedure in which a frame that triggers/initiates MLD-based roaming is transmitted and received between an AP and a STA. Through a frame exchange, a negotiation for information and setting necessary for MLD-based roaming may be performed between an AP and a STA, and MLD-based roaming may be completed based on negotiated information/setting. Accordingly, a STA may no longer operate with an OAP (e.g., AP 1) and may operate with a NAP (e.g., AP 2).

In this way, in order for MLD-based roaming to be triggered/initiated, a frame exchange is required between a STA and an AP. A frame exchanged may correspond to a management frame (e.g., a beacon, a (re)association request/response, a probe request/response, an action frame, etc.). For example, an action frame which is a type of management frame may be used for a frame exchange. In examples described below, a frame exchanged for triggering/initiating MLD-based roaming may be referred to as a MLD roaming request frame and a MLD roaming response frame or may be simply referred to as a request frame and a response frame.

Hereinafter, specific examples of an announcement procedure and a frame exchange procedure for MLD-based roaming are described.

### Embodiment 1-1

Each AP belonging to an upper MLD may announce whether MLD-based roaming is possible (e.g., whether a frame exchange for triggering/initiating MLD-based roaming is possible). The announcement information may include information indicating whether MLD-based roaming is enabled or at least one of MLD-based roaming identifier information.

For example, information on whether MLD-based roaming is enabled may be defined as 1-bit information. The first value of 1-bit information may indicate being enabled, and the second value may indicate being disabled.

For example, MLD-based roaming identifier (ID) information may correspond to a group ID of APs performing/supporting MLD-based roaming. MLD-based roaming may be supported only between APs having the same group ID (i.e., belonging to the same group). A MLD-based roaming identifier ID may be defined as 2-octet-sized information similar to the existing mobility domain ID (MDID), or may be defined as information of a smaller size than that (e.g., the minimum bit size supporting the range of values granted as an ID).

Announcement information as above may be included in a management frame (e.g., a beacon, a probe response, a (re)association response, etc.). For example, announcement information may be included in a new information element included in a management frame (e.g., a MLD-based roaming element). Alternatively, announcement information may be included in a reduced neighbor report (RNR) element included in a management frame.

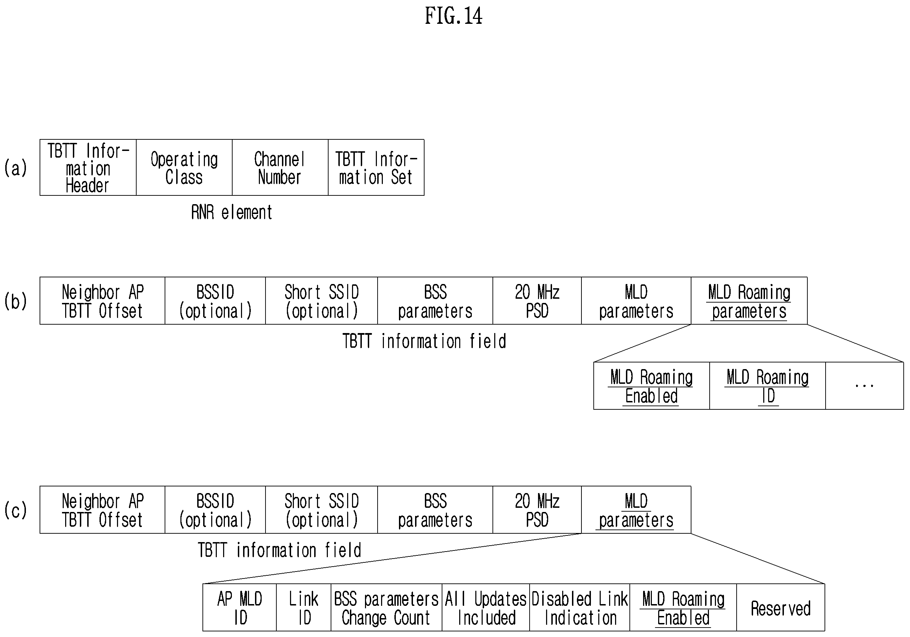

FIG. 14 is a diagram for describing an example of an element including announcement information according to the present disclosure.

As in FIG. 14(a), a RNR element may include a target beacon transmission time (TBTT) information header, an operation class, a channel number and TBTT information set fields. Among them, a TBTT information set may include at least one TBTT information field.

FIG. 14(b) and (c) correspond to the exemplary format of a TBTT information field. A TBTT information field may include a neighbor AP TBTT offset, a BSSID, a short BSSID, a BSS parameter, 20MHz Power Spectral Density (PSD) and MLD parameter subfields.

As in the example of FIG. 14(b), announcement information may be included in the MLD roaming parameter subfield of a TBTT information field. For example, a MLD roaming parameter subfield may include a MLD roaming enabled subfield, a MLD roaming ID subfield, etc. corresponding to announcement information.

As in the example of FIG. 14(c), announcement information may be included in the MLD parameter subfield of a TBTT information field. For example, a MLD parameter may include a MLD roaming enabled subfield corresponding to announcement information, in addition to a disabled link indication field including an AP MLD ID, a link ID, a BSS parameter change count and all updates.

The example of FIG. 14(b) corresponds to a case where a MLD roaming parameter subfield which is a new subfield including announcement information is defined when the size of a MLD parameter subfield in a TBTT information field is not enough to include announcement information. In this case, the size of a TBTT information field may be changed to a value exceeding 16 bits.

Additionally or alternatively, since whether a MLD roaming parameter subfield exists may mean whether MLD-based roaming is enabled, a MLD roaming enabled subfield may not be included in a MLD roaming parameter subfield. For example, whether MLD-based roaming is enabled may be implicitly indicated according to whether a new subfield corresponding to/including MLD roaming ID information exists in a TBTT information field.

The example of FIG. 14(c) relates to a case where only a MLD roaming enabled subfield is defined for a MLD parameter subfield in a TBTT information field when announcement information includes only information on whether MLD-based roaming is enabled. In this case, the size of a MLD parameter subfield (e.g., 8 bits) may not be changed.

### Embodiment 1-2

The request information for triggering/initiating MLD-based roaming may be included in a management frame (e.g., a MLD roaming request frame). For example, a MLD roaming request frame may have an exemplary format in Table 1. A format in Table 1 is exemplary, and some fields may include an additional field which is omitted or not illustrated.

**[Table 1]**

| Order | Information |
|---|---|
| 1 | Category |
| 2 | UHR Action or Protected UHR Action |
| 3 | Dialog Token |
| 4 | Reconfiguration ML Element |

The category of order 1 may be set as a value indicating a category corresponding to a MLD roaming request frame. For example, a category may correspond to a new UHR action or a protected UHR action. It is exemplary, and a MLD roaming request frame may be defined as a category under a different name.

The UHR action or protected UHR action of order 2 may be set as a value corresponding to a MLD roaming request.

The dialog token of order 3 may be set as a value for matching a request and a response.

The reconfiguration ML element of order 4 corresponds to an element including information required for a MLD-based roaming request. It is exemplary, and an element/a field under a different name including information required for a MLD roaming request may be defined and used.

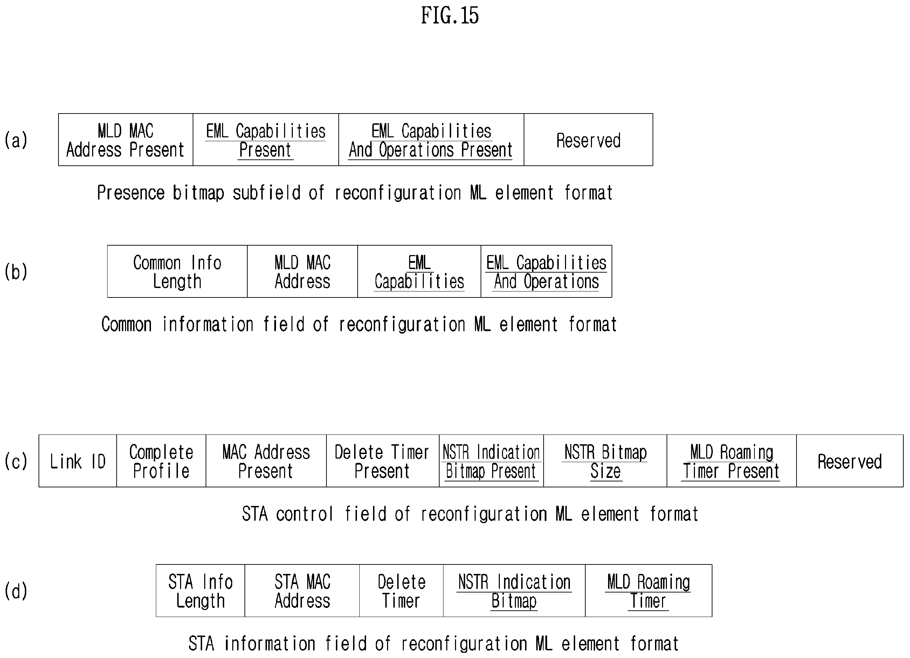

FIG. 15 is a diagram for describing an example of an element including request information according to the present disclosure.

FIG. 15(a) represents an example of a presence bitmap field (e.g., Presence Bitmap in a Multi-Link Control field in FIG. 8). The presence bitmap of a reconfiguration ML element may include information on whether a MLD MAC address subfield exists. In addition thereto, a presence bitmap according to the present disclosure may indicate whether an enhanced ML (EML) capability subfield exists in a common information field and whether a MLD capability and operation subfield exists in a common information field through the specific bit position of a bitmap.

FIG. 15(b) represents an example of a common information field (e.g., a Common Info field in FIG. 8). The common information field of a reconfiguration ML element may include a common information length subfield and a MLD MAC address subfield. In addition thereto, a common information field according to the present disclosure may include both, or may include one of, or may not include both an EML capability subfield or a MLD capability and operation subfield (according to a value at the corresponding bit position of a presence bitmap).

When at least one STA moving to a NAP (in particular, for a non-AP MLD) performs MLD-based roaming at the same time, EML capability information/MLD capability and operation information may be different, so this information may be provided to an AP as MLD roaming request information.

FIG. 15(c) represents an example of a STA control (e.g., STA Control in FIG. 8) field included in the per-STA profile sub-element of the link information field (e.g., Link Info field in FIG. 8) of a reconfiguration ML element. FIG. 15(d) represents an example of a STA information (e.g., STA Info in FIG. 8) field included in a per-STA profile sub-element of the link information field (e.g., Link Info field in FIG. 8) of a reconfiguration ML element.

When at least one STA performs MLD-based roaming at the same time, at least one per-STA profile sub-element may be included in a MLD roaming request frame.

Whether each subfield included in a STA information field exists may be indicated by the present subfield of a corresponding subfield in a STA control field. For example, the NSTR indication bitmap present subfield of a STA control field may indicate whether a NSTR indication bitmap subfield exists in a STA Information field, and if so, a bitmap size may be indicated by the NSTR bitmap size subfield of a STA control field. For example, the MLD roaming timer present subfield of a STA control field may indicate whether a MLD roaming timer subfield exists in a STA information field.

The value of the link identifier (ID) subfield of a STA control field in FIG. 15(c) may be set as a link identifier value corresponding to one of the NAPs (e.g., AP 2 affiliated with AP MLD 2, and if present, other AP(s) affiliated with AP MLD 2). For example, the link ID subfield of the STA control field of the first per-STA profile sub-element may be set as a link identifier value corresponding to AP 2 affiliated with AP MLD 2, and the link ID subfield of the STA control field of the second per-STA profile sub-element may be set as a link identifier value corresponding to another NAP affiliated with AP MLD 2.

The complete profile of a STA control field in FIG. 15(c) may correspond to complete information of a STA (i.e., all information included in a (re)association request frame). In a MLD-based roaming process, a new STA is not associated with an AP affiliated with an upper MLD, but an existing STA moves between APs affiliated with a corresponding upper MLD, so it may be considered that a STA's capability and operation parameter, etc. are not changed. Considering a case where an upper MLD knows the information of a corresponding STA, a complete profile subfield in FIG. 15(c) may be set as a value indicating that changed profile information (or partial profile information) is included.

For example, a partial profile corresponds to a case where the value of the complete profile subfield of a STA control field is 0, and only a changed information field/element (i.e., information changed compared to an OAP when moving to a NAP) may be included in a STA profile field in a per-STA profile sub-element (e.g., a STA profile field in FIG. 8). Alternatively, the complete profile subfield of a STA control field may be changed to the name of a changed profile subfield, and when the value of a corresponding subfield is 1, only a changed information field/element (i.e., information changed compared to an OAP when moving to a NAP) may be included in a STA profile field.

Alternatively, it may be considered that a STA' capability and operation parameter, etc. are completely changed in a MLD-based roaming process. In this case, the value of a complete profile subfield in FIG. 15(c) may be set as 1, and a STA profile field may include complete information (e.g., all information included in a (re)association request frame).

When a STA moves to another AP, information on STR or NSTR for each link may be different from the non-AP MLD perspective, so a NSTR indication bitmap (e.g., a NSTR indication bitmap subfield in FIG. 15(d)) may be included in a MLD roaming request frame.

A MLD roaming timer subfield may indicate a time when MLD-based roaming is completed and a STA no longer operates with an OAP and operates with a NAP. A MLD roaming timer value included in a request frame transmitted by a STA may be interpreted/used as reference information in an AP or an upper MLD.

Additionally or alternatively, MLD roaming timer information may include a value for each of at least one NAP or may include a value that is commonly applied to at least one NAP. For example, the number of individual MLD roaming timer information corresponding to the number of NAPs may be included in the per-STA profile sub-element of a MLD roaming request frame. For example, one MLD roaming timer information that is common to at least one NAP may be included in the common information field of a MLD roaming request frame.

### Embodiment 1-3

The response information for a MLD-based roaming request may be included in a management frame (e.g., a MLD roaming response frame). For example, a MLD roaming response frame may have an exemplary format in Table 2. A format in Table 2 is exemplary, and some fields may include an additional field which is omitted or not illustrated.

**[Table 2]**

| Order | Information |
|---|---|
| 1 | Category |
| 2 | UHR Action or Protected UHR Action |
| 3 | Dialog Token |
| 4 | Status Code |
| 5 | Basic ML Element |
| 6 | Group Key Information |
| 7 | Channel Switching Announcement Element (Optional) |
| 8 | Extended Channel Switching Announcement Element (Optional) |

A MLD roaming response frame may include a link-level parameter. For example, a link-level parameter may include information necessary to change a link while maintaining a ML setup.

The category of order 1 may be set as a value indicating a category corresponding to a MLD roaming response frame. For example, a category may correspond to a new UHR action or a protected UHR action. It is exemplary, and a MLD roaming response frame may be defined as a category under a different name.

The UHR action or protected UHR action of order 2 may be set as a value corresponding to a MLD roaming response.

The dialog token of order 3 may be set as a value for matching a request and a response.

The status code of order 4 may be set as one of various values representing success, failure, accept, reject, unsupported, invalid, error, etc. Among the values indicated by a status code, failure, rejection, unsupported, invalid, error, etc. may be defined as a different value for each cause thereof.

The basic ML element of order 5 may include information required for roaming related to an upper MLD (or a roaming MLD) and a roaming target AP/AP MLD (e.g., a NAP or an AP MLD including a NAP). For this purpose, some fields of the existing basic ML element format may be modified, omitted, or a new field may be added.

For example, the common information field of a basic ML element may basically have a format similar to the example of a common information field in FIG. 8. Here, the common information field of the basic ML element of a MLD roaming response frame may include information common to or corresponding to NAP(s) where at least one STA performs MLD-based roaming.

For example, the link information field of a basic ML element may basically have a format similar to the example of a link information field in FIG. 8. Here, when at least one STA performs MLD-based roaming at the same time, the link information field of the basic ML element of a MLD roaming response frame may include at least one per-STA profile sub-element for APs corresponding thereto. Accordingly, a STA control field, a STA information field and/or a STA profile field which are included in the per-STA profile sub-element of the link information field of the basic ML element of a MLD roaming response frame may include the following features.

The link ID subfield of a STA Control field may be set as a link ID value corresponding to a NAP.

The complete profile of a STA control field may correspond to complete information of an AP (i.e., all information included in a (re)association response frame). When a STA performs MLD-based roaming between APs affiliated with the same one upper MLD (or roaming MLD), it may be considered that an AP's capability or operation parameter, etc. is not changed. In this case, a complete profile subfield may be set as a value (e.g., 0) indicating that changed profile information (or partial profile information) is included. Accordingly, only a changed information field/element (i.e., information changed in a NAP compared to an OAP) may be included in a STA profile field within a per-STA profile sub-element.

Alternatively, it may be considered that an AP' capability and operation parameter, etc. are completely changed in a MLD-based roaming process. In this case, the value of a complete profile subfield may be set as 1, and a STA profile field may include complete information (e.g., all information included in a (re)association response frame).

A STA control field may include a field indicating whether a MLD roaming timer exists. When it is indicated that a MLD roaming timer exists, a STA information field may include a MLD roaming timer subfield. A MLD roaming timer subfield may indicate a time when MLD-based roaming is completed and a STA no longer operates with an OAP and operates with a NAP. The value of a MLD roaming timer included in a MLD roaming response frame may be set based on/by using the value of a MLD roaming timer included in a MLD roaming request frame (e.g., as a changed value when a requested timer value is changed). For example, when the value of a MLD roaming timer requested by a STA is used as it is and the value of a status code is set as a value representing success/accept, a MLD roaming timer subfield may not be included in a MLD roaming response frame.

Additionally or alternatively, MLD roaming timer information may include a value for each of at least one NAP or may include a value that is commonly applied to at least one NAP. For example, the number of individual MLD roaming timer information corresponding to the number of NAPs may be included in the per-STA profile sub-element of a MLD roaming response frame. For example, one MLD roaming timer information that is common to at least one NAP may be included in the common information field of a MLD roaming response frame.

The group key information of order 6 may be set as a value representing group key information for NAPs. Since a group key may be different for each link, group key information for NAPs needs to be provided. For example, a field corresponding to group key information may include a subfield representing the length of a group key information subfield and a subfield set as a value of group key information. The group key information may include a MLO group temporal key (GTK) key data encapsulation (KDE) format, a MLO integrity group temporal key (IGTK) KDE, a MLO beacon integrity group temporal key (BIGTK) KDE format, etc. including the link identifier of a NAP.

The channel switching announcement element information and the extended channel switching announcement element information of orders 7 and 8 may be omitted from a MLD roaming response frame when all APs where MLD-based roaming is enabled operate in the same channel. When MLD-based roaming is performed in a different channel, channel information may be provided through an (extended) channel switching announcement element. Additionally or alternatively, an (extended) channel switching announcement element may be included in the STA information/STA profile field of the basic ML element of order 5.

In examples described above, a procedure is described in which as a STA transmits a roaming request to an OAP and receives a roaming response from an OAP, a STA's roaming from an OAP to a NAP is performed. Additionally or alternatively, as an OAP transmits a roaming request to a STA and receives a roaming response from a STA, a STA's roaming from an OAP to a NAP may be performed. A roaming request provided from an OAP to a STA may include link identifier(s) corresponding to candidate(s) of a NAP, and a roaming response provided from a STA to an OAP may include a link identifier for a NAP to which a STA will perform roaming. This roaming request from an OAP and roaming response from a STA may be performed based on announcement information related to MLD-based roaming of an OAP. In addition, a roaming request from an OAP may include information included in a roaming request from a STA in examples described above, and a roaming response from a STA may include information corresponding to a roaming response from an OAP in examples described above.

Unlike BSS transition in the existing WLAN system, MLD-based roaming according to the examples of the present disclosure may support that at least one STA moves from at least one OAP to at least one NAP by changing a link while maintaining a ML setup within an upper MLD (or a roaming MLD). Accordingly, overhead and risk of data loss may be reduced compared to the existing BSS transition.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless local area network (WLAN) system, the method comprising:
receiving announcement information related to a multi-link device (MLD)-based roaming from a first access point (AP) associated with the STA;
transmitting a request including at least one link identifier for at least one second AP to the first AP; and
receiving a response including the at least one link identifier from the first AP.

2. The method of Claim 1, wherein:
the announcement information includes at least one of information on whether the MLD-based roaming is enabled, or a MLD-based roaming identifier.

3. The method of Claim 1, wherein:
the announcement information is included in a MLD-based roaming element or a reduced neighbor report (RNR) element included in a management frame, and
the MLD-based roaming element or the RNR element includes at least one parameter for a MLD.

4. The method of Claim 1, wherein:
the request includes a reconfiguration multi-link (ML) element, and
a common information field of the reconfiguration ML element includes information on at least one of an enhanced ML (EML) capability, or a MLD capability and operation.

5. The method of Claim 1, wherein:
the request includes a reconfiguration ML element, and
a per-STA profile sub-element of the reconfiguration ML element includes information on at least one of a nonsimultaneous transmit and receive (NSTR) bitmap size, a NSTR indication bitmap, a MLD-based roaming timer, a complete profile set as 0 or 1, or a changed profile.

6. The method of Claim 5, wherein:
information included in the per-STA profile sub-element is included in at least one of a STA control field, or a STA information field of the per-STA profile sub-element.

7. The method of Claim 1, wherein:
the response includes a basic ML element, and
a common information field of the basic ML element includes information common to the at least one second AP.

8. The method of Claim 1, wherein:
the response includes a basic ML element, and
at least one of a STA control field or a STA information field of the basic ML element includes at least one of a MLD-based roaming timer, or a complete profile set as 0 or 1.

9. The method of Claim 1, wherein:
the response includes a basic ML element, and
at least one of a STA information field or a STA profile field of the basic ML element includes channel switching announcement information, or extended channel switching announcement information.

10. The method of Claim 1, wherein:
the response includes group key information

11. The method of Claim 1, wherein:
the first AP and the at least one second AP are affiliated with one roaming MLD.

12. The method of Claim 11, wherein:
the first AP is affiliated with a first AP MLD, and
the at least one second AP is affiliated with a second AP MLD.

13. The method of Claim 1, wherein:
the STA is affiliated with a non-AP MLD.

14. The method of Claim 1, wherein:
based on the response including the at least one link identifier, an association procedure with the at least one second AP is initiated.

15. The method of Claim 12, wherein:
the STA corresponds to the first STA among a first STA and a second STA affiliated with a non-AP MLD,
a roaming of the first STA from the first AP affiliated with the first AP MLD to one of the at least one second AP affiliated with the second AP MLD is performed, and
a roaming of the second STA from a third AP affiliated with the first AP MLD to another one of the at least one second AP affiliated with the second AP MLD is performed.

16. A station (STA) device in a wireless local area network (WLAN) system, the device comprising:
at least one transceiver; and
at least one processor connected to the at least one transceiver,
wherein the at least one processor is configured to:
receive, through the at least one transceiver, announcement information related to a multi-link device (MLD)-based roaming from a first access point (AP) associated with the STA;
transmit, through the at least one transceiver, a request including at least one link identifier for at least one second AP to the first AP; and
receive, through the at least one transceiver, a response including the at least one link identifier from the first AP.

17. A method performed by an access point (AP) in a wireless local area network (WLAN) system, the method comprising:
transmitting announcement information related to a multi-link device (MLD)-based roaming to at least one station (STA) associated with the AP;
receiving a request including at least one link identifier for at least one second AP from the at least one STA; and
transmitting a response including the at least one link identifier to the at least one STA.

18. An access point (AP) device in a wireless local area network (WLAN) system, the device comprising:
at least one transceiver; and
at least one processor connected to the at least one transceiver,
wherein the at least one processor is configured to:
transmit, through the at least one transceiver, announcement information related to a multi-link device (MLD)-based roaming to at least one station (STA) associated with the AP;
receive, through the at least one transceiver, a request including at least one link identifier for at least one second AP from the at least one STA; and
transmit, through the at least one transceiver, a response including the at least one link identifier to the at least one STA.

19. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to Claim 1.

20. At least one non-transitory computer-readable medium storing at least one instruction, wherein:
the at least one instruction controls a device to perform a method according to Claim 1 in a wireless local area network (WLAN) system by being executed by at least one processor.
